# EUROPEAN PATENT APPLICATION

(11) **EP 2 701 351 A1**
(43) Date of publication of application: **26.02.2014**
(21) Application number: 13003302.0
(22) Date of filing: 28.06.2013
(51) Int. Cl.: H04L 12/58

(54) **Electronic messaging system utilizing social classification rules**

(30) Priority: 23.08.2012 US 201213593409
(71) Applicant: Linkedin Corporation, Mountain View, California 94043 (US)
(72) Inventor: Belkin, Ruslan, Mountain View, California 94043 (US); Wang, John, Mountain View, California 94043 (US)
(74) Representative: Müller-Boré & Partner Patentanwälte PartG mbB

(57) **Abstract**

Techniques for identifying and organizing electronic messages are described. With some embodiments, a method receives a user interaction update from a messaging client associated with a first user. The user interaction update has data indicating that the first user interacted with an electronic message. The method may then determine that the first user is associated with a classification attribute that defines a relationship in a social network. Using the user interaction update, the a social classification rule corresponding to the classification attribute associated with the first user is then updated. The social classification rule may include data usable to organize a plurality of electronic messages. Finally, the method may optionally send the updated social classification rule to a messaging client associated with a second user, where the updated social classification rule can be used to organize electronic messages displayed by the messaging client associated with the second user.

## Description

### TECHNICAL FIELD

The present disclosure generally relates to data processing systems. More specifically, the present disclosure relates to methods, systems and computer program products for organizing electronic messages based on a history of interactions from a group of users.

### BACKGROUND

It is currently common to send electronic messages through an electronic mail service. An electronic mail service is a computer- or web-based application that routes electronic messages, such as electronic mail (hereinafter "email"), to one or more recipients. With the proliferation of such email services, email has become one of the most widely used communication tools in the world. For example, people commonly use one or more email services to send electronic communications for work purposes and for private purposes. As such, a typical person may receive many emails through one or more electronic mail services.

To assist users in identifying emails that may be of interest, many email services provide search facilities capable of identifying emails that contain specified words or phrases. Typically, these search facilities will provide the user with a search result that identifies the emails that satisfy the user specified search criteria. Once the email service generates a search result, the user may perform subsequent searches to narrow the search results. For example, a user may manually open each email identified in the search result, one at a time, to determine whether the email is actually of interest. Further, depending on the number of emails identified by the search result, the user may run a supplementary search using different search terms to reduce the number of emails in the search result.

Additionally, it is now common to send electronic messages through a social networking service. A social networking service is a computer- or web-based application that enables users to establish links or connections with persons for the purpose of sharing information with one another. Some social networks aim to enable friends and family to communicate with one another, while others are specifically directed to business users with a goal of enabling the sharing of business information. For purposes of the present disclosure, the terms "social network" and "social networking service" are used in a broad sense and are meant to encompass services aimed at connecting friends and family (often referred to simply as "social networks"), as well as services that are specifically directed to enabling business people to connect and share business information (also commonly referred to as "social networks" but sometimes referred to as "business networks"). Description of the Drawings

Some embodiments are illustrated by way of example and not limitation in the FIGs. of the accompanying drawings, in which:

FIG. 1 is a block diagram illustrating various components of an electronic messaging system for organizing electronic messages based on a social classification rule, consistent with some embodiments of the invention;

FIG. 2 is a block diagram illustrating some of the functional components or modules that comprise the messaging client and the classification rule engine, according to various embodiments;

FIG. 3 is a flow chart illustrating a simplified method of organizing electronic messages based on user interactions from multiple users, according to example embodiments;

FIG. 4 is a sequence diagram illustrating an example of a sequence of operations involved in a method of updating a social classification rule, according to some example embodiments;

FIG. 5 is a sequence diagram illustrating an example of a sequence of operations involved in a method of organizing electronic messages using a social classification rule, according to some example embodiments;

FIG. 6 is a user interface diagram showing an example of a user interface that may be displayed by a messaging client to provide electronic messages organized according to a social classification rule, according to example embodiments;

FIG. 7 is a user interface diagram showing an example of a user interface that may be displayed by a messaging client to provide electronic messages organized according to a social classification rule, according to example embodiments; and

FIG. 8 is a block diagram of a machine in the form of a computing device within which a set of instructions, for causing the machine to perform any one or more of the methodologies discussed herein, may be executed.

### DETAILED DESCRIPTION

The present disclosure describes methods and systems for organizing electronic messages (e.g., email) based on social classification rules. In the following description, for purposes of explanation, numerous specific details are set forth in order to provide a thorough understanding of the various aspects of different embodiments of the present invention. It will be evident, however, to one skilled in the art, that the present invention may be practiced without all of the specific details.

Consistent with embodiments of the invention, and as described in detail herein, an electronic messaging service includes logic to organize electronic messages based on social classification rules. As used herein, a "social classification rule" may refer to any suitable data useable to organize electronic messages associated with one user based on a history of user interactions from a group of other users. For example, when a group of users interact (e.g., replying, tagging, and the like) with electronic messages sent by "JOHN SMITH," the electronic messaging service may build a social classification rule that indicates that electronic messages sent by "JOHN SMITH" are important to a user of the electronic messaging service.

In some embodiments, an electronic messaging service may associate a social classification rule with a classification attribute. A "classification attribute," as used herein, may refer to any suitable attribute, property, or relationship used by a social network to classify or otherwise differentiate users. For example, in a social network system, a user may be associated with a member profile that includes classification attributes, such as a job title, years of experience, name, skills, and the like. Where a social classification rule is associated with a classification attribute, the social classification rule is based on a history of user interactions from a group of users that are associated with the classification attribute (e.g., each user from the group has member profile with the classification attribute). Hence, the classification rule associated with, for example, the job title "EXECUTIVE" is based on user interactions from a group of users having member profiles with the "EXECUTIVE" job title. In this way, a classification rule can not only indicate that an electronic message sent by "JOHN SMITH" is important to a general population of users but also indicates that the electronic message is comparatively more important to users that have an "EXECUTIVE" job title.

In some applications, the electronic messaging service may utilize social data from a social networking service to build and access social classification rules. For example, in some cases, when a user interacts with an electronic message, the electronic messaging service may communicate user interaction updates to a classification rule engine that, in turn, updates one or more social classification rules. The user interaction updates may include member profile data (e.g., a member profile identifier or one or more classification attributes), message data (extracted data or metadata from the electronic message), and interaction data (data about how the user interacted with the electronic message, such as an indication of the operation performed, the time it took a user to perform the operation, and the like). Upon receiving the user interaction updates, the classification rule engine may update a social classification rule associated with some part of the member profile data of the user interaction update.

In an example embodiment, when the classification rule engine receives a user interaction update, the classification rule engine identifies one or more social classification rules that are associated with the member profile data included in the user interaction update. For example, if the member profile data includes a classification attribute (e.g. a job title, such as "EXECUTIVE"), the classification rule engine identifies the social classification rule associated with the classification attribute included in the member profile. The one or more identified social classification rules are then updated according to the message data and the interaction data. For example, and not limitation, if a user with the "EXECUTIVE" job title responds to an electronic message that was sent by "JOHN SMITH," the classification rule engine may update the social classification rule associated with "EXECUTIVE" job title to indicate that electronic messages sent by "JOHN SMITH" are important.

The ability to organize electronic messages for a given user using social classification rules will find practical applications in a great number of scenarios. In some applications, an electronic messaging client can display electronic messages organized or otherwise prioritize according to social classification rules associated with classification attributes of a user. For example, the electronic messaging client may use the social networking service to obtain a social classification rule associated with a classification attribute associated with a user. With the classification rule, the electronic messaging client may organize or otherwise prioritize electronic messages based on the social classification rule.

Accordingly, using a social or business networking service consistent with an embodiment of the invention provides a user of an email client with a simple mechanism to view comparatively relevant emails. For example, when the user launches the email client or selects a user interface (UI) element (e.g., a button or link), embodiments may display emails in a manner organized according to the social classification data corresponding to the behaviour of a group of users within a social or business network. Such an email client may, for example, order, prioritize, or otherwise organize the electronic messages or emails based on a priority that indicates relevance. In such cases, those emails that are likely important to a user are displayed before other messages. In this way, potentially important messages are shown in such a way that the user may easily see them.

Other advantages and aspects of the presently described inventive subject matter will be apparent from the description of the various Figures included herewith.

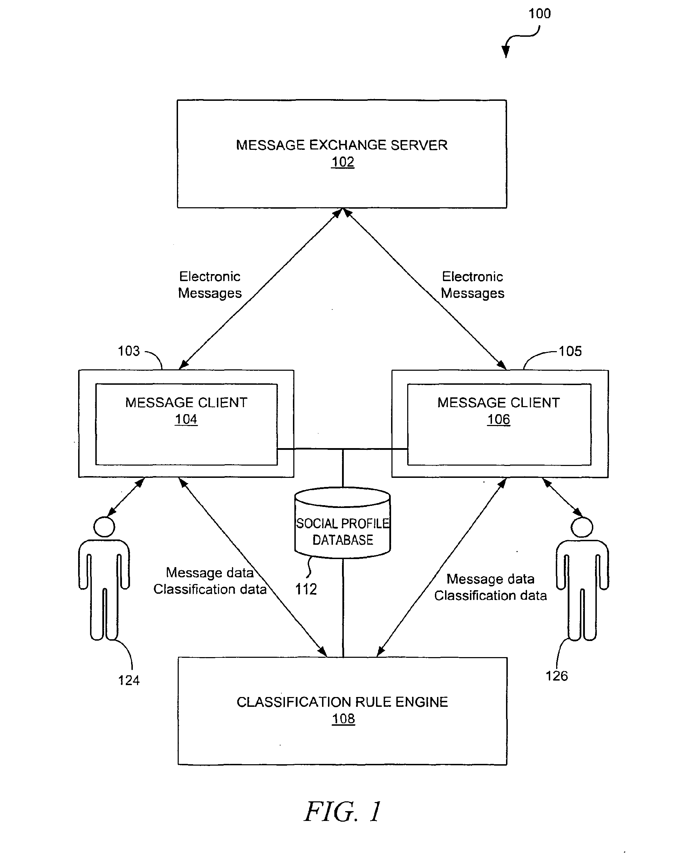

FIG. 1 is a block diagram illustrating various components of an electronic messaging system 100 for organizing electronic messages based on a social classification rule, consistent with some embodiments of the invention. As shown in FIG. 1, the electronic messaging system 100 includes a message exchange server 102, users 124, 126, client devices 103, 105, and a classification rule engine 108. As is understood by skilled artisans in the relevant computer and Internet-related arts, each component, module, or engine shown in the figures described herein represents a set of executable software instructions and the corresponding hardware (e.g., memory and processor) for executing the instructions. To avoid obscuring the inventive subject matter with unnecessary detail, various functional components, modules, and engines that are not germane to conveying an understanding of the inventive subject matter have been omitted from the figures described herein. However, a skilled artisan will readily recognize that various additional functional components, modules, and engines may be used with an electronic messaging system, such as that illustrated in FIG. 1, to facilitate additional functionality that is not specifically described herein. Furthermore, the various fianctional components, modules, and engines depicted in FIG. 1 may reside on a single server computer, or may be distributed across several server computers in various arrangements.

The message exchange server 102 may be a network addressable server computer configured to transmit electronic messages (e.g., email) from a sender to one or more recipients. In particular, FIG. 1 shows that the message exchange server 102 communicates electronic messages between the client devices 103, 105 operated by users 124, 126, respectively. Consistent with various embodiments, the message exchange server 102 and the client devices 103, 105 may include logic to send and receive data according to Hypertext Transport Protocol (HTTP), Internet Message Access Protocol (IMAP), Post Office Protocol (POP), Simple Mail Access Protocol (SMAP), and other web-based, application programming interface (API) messages. In some embodiments, the message exchange server 102 may include application logic, which, in conjunction with the client devices 103, 105, generates various user interfaces (e.g., web pages) with data retrieved from various data sources.

The client devices 103, 105 may be computer devices such as laptops, mobile phones, desktops and the like. The client devices 103, 104 may operate messaging clients 104, 106, respectively. The messaging clients 104, 106 may include logic that, when executed by one or more processors, sends, receives, displays, or otherwise operates on electronic messages. A web browser or an OUTLOOK® client, as provided by MICROSOFT®, are examples of messaging clients within the contemplation of this disclosure. Accordingly, the messaging client 106 may send an electronic message to messaging client 104 through the message exchange server 102.

According to some embodiments, the messaging clients 104, 106 may be configured further to communicate with the classification rule engine 108. The classification rule engine 108 may be a network addressable computer device that includes logic for providing fianctionality associated with maintaining and accessing social classification rules. For example, the classification rule engine 108 may receive user interaction updates as the messaging clients 104, 106 interact (e.g., send, receive, tag, and the like) with electronic messages. User interaction updates, as described above, may include member profile data, message data, and interaction data. Consistent with embodiments described herein, the classification rule engine 108 may utilize a number of classifiers, such as rule-based classifiers, decision tree-based classifiers, neural network classifiers, support vector machine classifiers, and Bayesian classifiers. Maintaining such classifiers may involve updates probability models based on statistical learning from past interactions of other users or groups of users.

In addition to receiving user interaction updates, the classification rule engine 108 may also communicate social classification rules to the message clients 104, 106. As described above, a social classification rule may include any suitable data, derived from user interactions from a group of users that are usable to organize or otherwise prioritize a set of electronic messages.

The messaging clients 104, 106 and the classification rule engine 108 may be communicatively coupled to a social profile database 112. The social profile database 112 may store member profiles associated with the users 124, 126 of the messaging clients 104, 106. In some embodiments, the member profiles are part of a social or business network service. The member profiles may include classification attributes associated with the users of the messaging clients. Consistent with embodiments described herein, a user's age, gender, interests, contact information, home town, address, the name of the member's spouse and/or family members, and so forth are examples of classification attributes. With other embodiments, such as some business networking services, a member profile may include classification attributes related to a professional resume or curriculum vitae, such as classification attributes relating to a person's education, employment history, skills, professional organizations, and so on. In some embodiments, a member profile may be viewable to the public by default, or alternatively, the member profile may designate some portion of the member profile is to be public by default.

The users 124, 126 may interact with the messaging clients 104, 106 to generate, receive, transmit, or otherwise access electronic messages through the message exchange server 102. Further, the users 124, 126 may interact with the messaging clients 104, 106 to receive or otherwise access the social classification rules maintained by the classification rule engine 108 and to transmit user interaction updates to the classification rule engine 108.

It is to be appreciated that FIG. 1 merely illustrates one example embodiment of a system that organizes electronic messages based on classification rules and that other embodiments are within the contemplation of the present disclosure. For example, it should be appreciated that the classification rule engine 108, although displayed as a separate component, may be a plug-in deployed within the messaging client 104 or the message exchange server 102. Further, the message exchange server 102 may be configured to communicate with the classification rule engine 108 in response to receiving the electronic messages and communication from the message clients 104, 106.

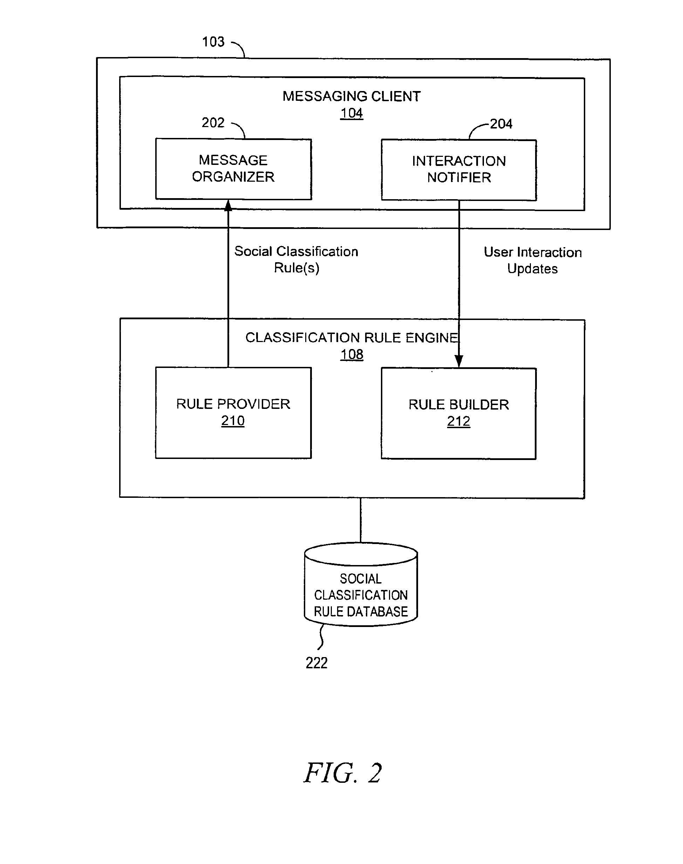

FIG. 2 is a block diagram illustrating some of the functional components or modules that comprise the messaging client 104 and the classification rule engine 108, according to various embodiments. To simplify discussion of example embodiments disclosed herewith, FIG. 2 does not show messaging client 106. However, it is to be appreciated that messaging client 106 may also include the modules and functionality discussed with respect to the messaging client 104.

FIG. 2 shows that the messaging client 104 includes a message organizer module 202 and an interaction notifier module 204. The message organizer module 202 may include logic and data used to receive one or more social classification rules from the classification engine 108. Using the one or more social classification rules, the message organizer module 202 may then organize one or more electronic messages according to historical user interactions performed by a group of users. In some cases, the message organizer module 202 may organize the one or more electronic messages by ranking the electronic messages according to a relevancy score calculated as a function of a social classification rule (or social classification rules) and an electronic message. In other cases, the message organizer module 202 may organize the one or more electronic messages by tagging electronic messages based on a comparison between a relevancy score and a threshold.

The interaction notifier module 204 may include logic and data used to send user interaction updates to the classification rule engine 108. As is described in greater detail below, the classification rule engine 108 may use the user interaction updates associated with one or more users to build up or update a social classification rule. As previously mentioned, user interaction updates may include data relating to member profile data (a member profile identifier, classification attributes, etc), message data (keywords, header information, etc), and interaction data (e.g., replying, accessing, deleting, tagging, etc).

Additionally, FIG. 2 shows that the classification rule engine 108 includes a rule provider module 210 and a rule builder module 212. The rule provider module 210 may provide social classification rules to a message client. In some embodiments, the rule provider module 210 accesses a social classification rule database 222 to identify one or more social classification rules that are associated with a user. Consistent with embodiments described herein, the social classification rule database 222 may index the social classification rules on a classification attribute. Accordingly, upon a request from the message organizer 202, the rule provider 210 may return a social classification rule corresponding to classification attributes associated with a user. In some embodiments, the classification attributes may be explicitly indicated by the message organizer 202. In other embodiments, the rule provider 210 may access the social profile database 112 (see FIG. 1) to identify one or more classification attributes that are associated with a given user.

The rule builder module 212 may include logic to build or update one or more social classification rules, as may be stored in the classification rule database 222. For example, using member profile data received in a user interaction update sent by the interaction notifier module 204, the rule builder module 212 updates a social classification rule associated with a classification attribute associated with the member profile data. In some cases, the member profile data includes classification attributes that are to be used to identify the social classification rule that is to be updated. In other cases, the member profile data sent in the user interaction update is a member profile identifier that can be used to access a member profile stored in the social profile database 112. The member profile accessed in this way can then be used to obtain one or more classification attributes associated with the user.

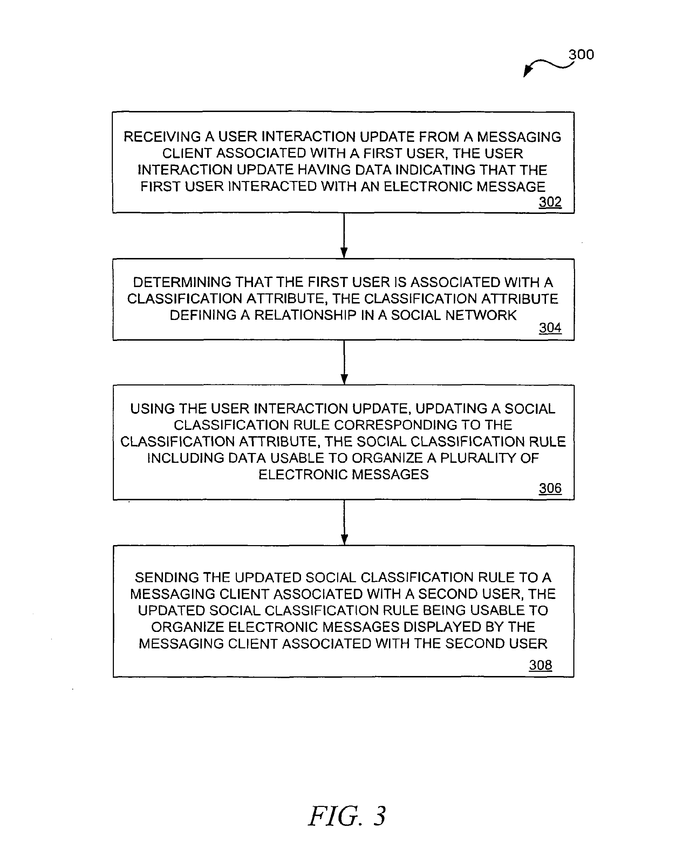

FIG. 3 is a flow chart illustrating a simplified method 300 of organizing electronic messages based on user interactions from multiple users, according to example embodiments.

The method 300 may begin at operation 302 when the method 300 receives a user interaction update from a messaging client associated with a first user. In some embodiments, the user interaction update has data indicating that the first user interacted with an electronic message. For example, the first user may have used an email client to respond to (e.g., reply or forward) a previously received email. Responsive to responding to the email, the email client may send a user interaction update to the classification rule engine 108 that includes data characterizing the interaction by the first user. For example, the user interaction update may include data that characterizes: the email (e.g., an identifier, keyword, feature, etc), the first user (e.g., a user identifier, attribute, etc), and the user interaction (e.g., an indication of the operation performed, such as a reply, forward, tag, etc).

At operation 304, after receiving the user interaction update, the method 300 then determines that the first user is associated with a classification attribute. In some embodiments, the classification attribute defines an attribute, property, or relationship used in a social network. For example, within the social network, the first user may have a member profile with a job title, location identifier, and associations with a group, company, other users of the social network, and the like. In some embodiments, the rule builder 212 performs operation 304 by using information included in the user interaction update, such as a user identifier, to access a member profile stored in social profile database 112. In some embodiments, the user interaction update includes the classification attributes.

At operation 306, the method 300, using the user interaction update, may update a social classification rule corresponding to the classification attribute. In some embodiments, the social classification rule includes data usable to organize multiple electronic messages, such as decision trees, rules, Bayesian models, nueral networks, and the like. For example, the social classification rule may include weights associated with an electronic message feature, such as electronic message header information (sender, reply, etc), keywords used in the electronic message or electronic message header, or any other suitable feature. Accordingly, operation 306 may involve updating particular weights in the social classification rule based on the user interaction update received at operation 302. Further, updating the particular weights may include increasing a weight associated with an electronic message feature corresponding to a data sent via the user interaction update. By way of example and not limitation, a classification rule may associate a from field of a message that has a value "JOHN DOE" with a particular weight. If a user interaction update is then received and the user interaction update indicates that the first user replied to a message from "JOHN DOE," operation 306 may then increase the weight associated with the from field having a value "JOHN DOE." The weights may be used to generate a relevancy score associated with an electronic message.

At operation 308, the method 300 sends the updated social classification rule to a messaging client associated with a second user. Once received by the messaging client associated with the second user, the messaging client may then use the social classification rule to organize the electronic messages and then display the organized electronic messages to the second user. For example, if the social classification rule includes electronic features associated with weights, then the messaging client may use the social classification rule to generate a relevancy score associated with each message and then rank the electronic messages according to the generated relevancy scores. As another example, if the social classification rule includes associations with particular electronic messages, the messaging client may then organize particular electronic message if the particular electronic message corresponds to an association within the social classification rule. In other embodiments, a Bayesian model may specify a relevancy score (e.g., represented by a probability) that an electronic message based on Bayes' theorem, where the evidence may include features of the given messages (e.g., keywords, header data, attachments, and the like), the second user (e.g., a classification attribute), or some combination thereof.

In some embodiments, the method 300 may provide a number of advantages. For example, electronic messaging systems may indicate particular electronic messages are important or otherwise relevant to a user based on prior actions performed by other users. As another example, the electronic messaging system may organize (e.g., using a separate window or tags) the electronic messages according to behaviours of other similar users. Indicating or otherwise organizing electronic messages may, in some cases, lead to better user experiences, thereby driving usage of a particular messaging client and/or social or business network.

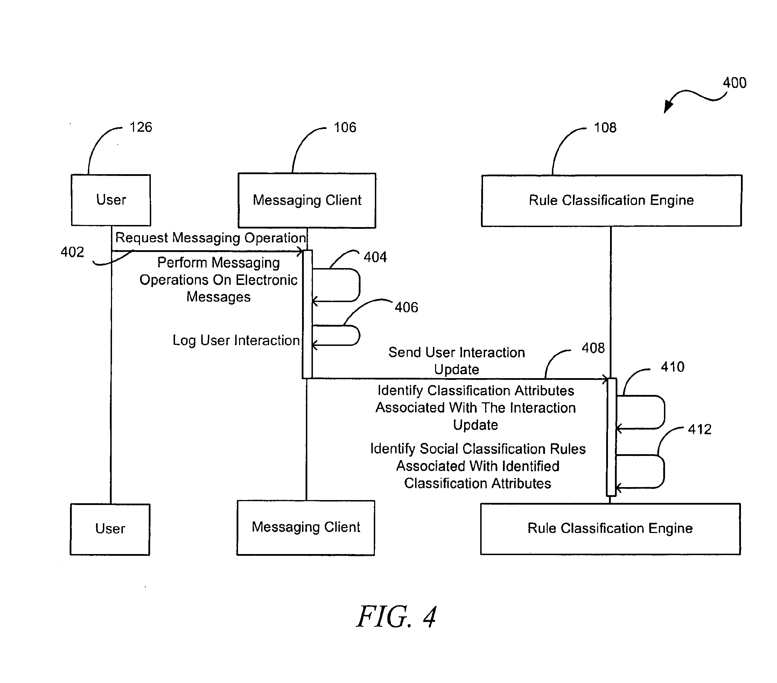

FIG. 4 is a sequence diagram illustrating an example of a sequence of operations involved in a method 400 of updating a social classification rule, according to some example embodiments. The method 400 may illustrate functionality associated with operations 302-306 of FIG. 3 in greater detail.
Further, the operations involving the messaging client 106 may be performed by the interaction notifier 204 shown in FIG. 2. The operations involving the classification rule engine 108 may be performed by the rule builder module 212 also shown in FIG. 2.

The method 400 may begin at operation 402 when the user 124 initiates a user interaction with an electronic message through the messaging client 106. For example, the user 126 may utilize a user interface provided by the messaging client 106 to select the electronic message to be tagged with a user or system defined tag. User or system defined tags may indicate that a particular electronic message is related to a particular group, subject or topic, or, in other cases, may indicate a priority (e.g., important, urgent, so on) with the electronic message. In other cases, the user 126 may interact with the messaging client 106 to cause the messaging client 106 to forward, delete, archive, or replying to the electronic message.

At operation 404, the messaging client 106 may perform the user interaction initiated by the user 126 at operation 402. For example, the messaging client 106 may associate the electronic message with a user or system defined tag. In other embodiments, the messing client 104 may send a response message (e.g., a reply message or a forward message) to the message exchange server 102 to deliver the response message to another user.

At operation 406, the messaging client 106 logs user interaction data related to the user interaction performed with respect to operation 404. In some embodiments, the messaging client 106 may log user interaction data in a message log associated with the electronic message. The message log may be meta-data associated with the electronic message. The message log may be stored, for example, according to extensible markup language (XML). The message log may include data relating to the user interaction performed on the electronic message (e.g., tagging, sending, forwarding, or deleting an electronic message), the user performing the operations (e.g., a user identifier, classification attributes associated with the user), and any other suitable meta-data relating to the electronic message, such as electronic message header data (e.g., the from, to, reply-to, carbon copy, and blind carbon copy fields). Accordingly, responsive to performing a user interaction, the messaging client 106 may update the message log associated with the corresponding electronic message. Depending on the embodiment, the message logs may be maintained by a messaging client 106 or the message exchange server 102.

Logging user interaction data (e.g., operation 406) may be performed periodically to generate a batch file of the user interaction data logged during a period of time or, in some embodiments, may be performed in substantially real time where user interaction data is logged responsive to detecting the messaging operation.

The messaging client 102 may then send a user interaction update to the classification rule engine 108. This is shown as operation 408. As described above, a user interaction update may include member profile data, message data, and interaction data. Sending the user interaction update to the classification rule engine 108, in some example embodiments, may involve extracting data from the message logs described above. For example, the messaging client 106 may access a messaging log to determine the messaging operations initiated by the user 126. In such cases, the messaging log may include data that indicates which electronic message was involved in a user interaction as well as a type of user interaction performed on the electronic message.

Further, in other embodiments, operation 408 may involve extracting data from other data sources. For example, in some embodiments, operation 408 may involve extracting message data from the electronic messages to characterize important features of the electronic message. For example, the messaging client 102 may characterize an electronic message according to the content of the electronic message, such as keywords found in the subject of the electronic message or the body of the electronic message. An electronic message may further or alternatively be characterized according to the electronic message header of the electronic message, such as may be contained in the from, to, carbon copy, blind carbon copy, and reply-to fields. The identified characterization of the electronic message may be sent in the user interaction update as message data.

Further, operation 408 may involve the messaging client 106 extracting member profile data relating to the user that initiated the user interaction to characterize the user 126. For example, the messaging client 102 may characterize the user according to the member profile of the user stored in the social profile database 112. Some embodiments may be configured so the messaging client sends a member profile identifier associated with the user 126. Other embodiments may be configured such that the messaging client 106 retrieves relevant classification attributes associated with member profile. Such classification attributes may identify a job title, department, team or group, boss, or any other suitable social data relating to the user 126.

Upon receiving the user interaction update previously sent according to operation 408, the classification rule engine 108 may identify the classification attributes associated with the user interaction update. This is shown as operation 410. As described above, some embodiments may utilize a user interaction update that includes a number of classification attributes. In such embodiments, the classification rule engine 108 may merely extract the classification attributes sent as part of the user interaction update. In other embodiments, the user interaction update may include a member profile identifier. Accordingly, in those embodiments, the classification rule engine 108 may access the social profile database 112 to access member profile data associated with the user 126 to identify one or more classification attributes associated with the user 126.

After identifying the classification attributes in operation 410, the classification rule engine 108 may then identify the social classification rules associated with the identified classification attributes. This is shown as operation 412. The operation 412 may involve the classification rule engine 108 accessing social classification rules stored in the classification rule database 222 (see, e.g., FIG. 2). The classification rule database 222 may index the social classification rules according to a classification attribute. Thus, in some embodiments, the classification rule engine 108 uses each classification attribute identified at operation 410 to identify a corresponding social classification rule indexed in the classification rule database 222. For example, the user 124 may be associated with the classification attribute "EXECUTIVE" because the member profile for the user 126 includes a classification attribute indicating that the user 124 has a job title associated with "EXECUTIVE." Accordingly, as part of operation 412, the classification rule engine 108 may identify a social classification rule indexed in the classification rule database 222 with the "EXECUTIVE" classification attribute.

Then, at operation 414, the classification rule engine 108 uses the interaction data of the user interaction update to update the social classification rule identified as part of operation 412. Updating the social classification rule may involve the classification rule engine 108 incorporating the user interaction from user 126 to indicate features of an electronic message that are important to a user similar to user 126. Consistent with embodiments described herein, updating the social classification rule may involve creating or updating one or more classifiers (e.g., a Bayesian models, rules, neural networks, and the like) to incorporate data from the user interaction update. In this way, the classifiers may "learn" how to classify messages automatically based on past interactions of users and group of users.

With some embodiments, some of the method operations illustrated in FIG. 4 may be performed offline by means of a batch process that is performed periodically (e.g., two times a day, daily, weekly, and so forth), while in other embodiments, the method operations may be performed online and in real-time as requests for updates to the social classification rule are being received and processed.

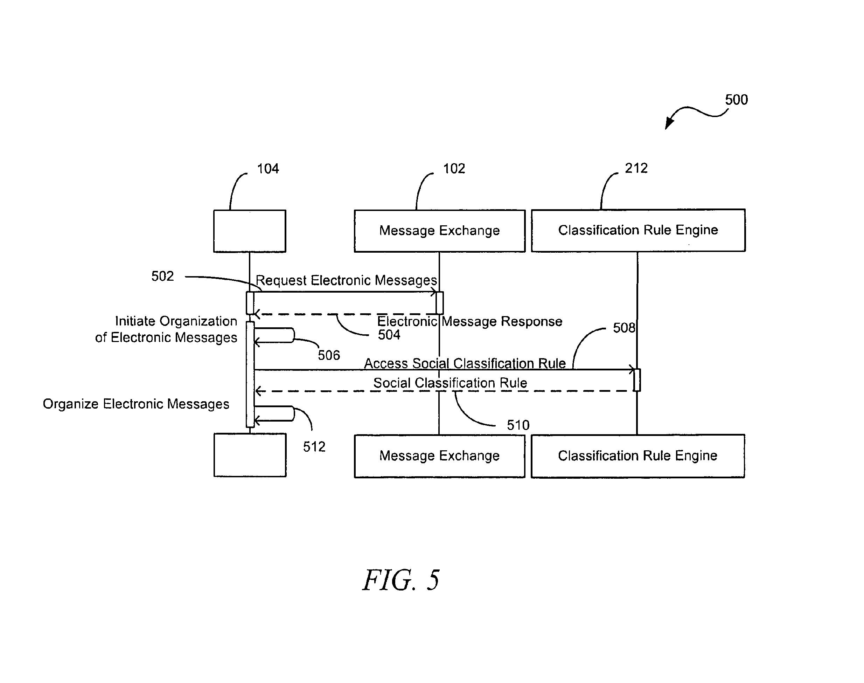

FIG. 5 is a sequence diagram illustrating an example of a sequence of operations involved in a method 500 of organizing electronic messages using a social classification rule, according to some example embodiments. As FIG. 5 shows, execution of the method 500 involves a number of components described with respect to FIGs. 1 and 2, such as the client 104, the message exchanger server 102, and the classification engine 108, and modules included therein. Further, it is to be appreciated that FIG. 5 may additionally involve any of the other components of the electronic messaging system 100 illustrated in FIG. 1.

The method 500 may begin at operation 502 when the message client 104 requests the message exchange server 102 for electronic messages 502. Responsive to receiving the request for electronic messages, the message exchange server 102 may access the message account corresponding to a user operating the message client 104 (e.g., user 124) and then may return the electronic messages corresponding to the user operating the messaging client 104. Returning the electronic messages is shown as operation 504. Operations 502 and 504 may be performed when a user uses the message client 104 to log onto an electronic message account hosted by the message exchange server 102. In some embodiments, operations 502 and 504 may be performed periodically to update the message client 104 with recently received electronic messages.

Although FIG. 5 shows that the message client 104 obtains electronic messages through a request- response mechanism (e.g., the combination of operation 502 and operation 504), it is to be appreciated that other embodiments may utilize other techniques, separately or in combination. For example, an example embodiment may operate such that the message exchange server 102 sends asynchronous messages to the message client 104 when the message exchange server 102 receives from another message client (e.g., message client 102). In this way, rather utilizing a system where the message client 104 pulls electronic messages from the message exchange server 102, the message exchange server 102 may push electronic messages to the message client 104. Such a push technique may operate according to a periodic schedule.

Although not shown in FIG. 5, once the message client 104 receives the electronic messages from the message exchange 102, the message client 104 may display the electronic messages to the user (e.g., user 124 shown in FIG. 1). At this point, the electronic messages may be organized chronologically (e.g., the date the electronic message was sent or received), by sender, keywords, user or system defined tags, or based on any other suitable factor. It is to be appreciated organizing the electronic messages chronologically, by user, by sender, and the like involves an organizational scheme based on meta-data derived from the electronic message or based on the preference of the user. Such organizational techniques, however, do not involve organizational data derived from user interactions from a group of users.

Consistent with embodiments describe herein, the message client 104 may also organize the electronic messages based on social classification rules. Operation 506 of FIG. 5 shows an operation of initiating the process of organizing the electronic messages based on the social classification rules. According to some example embodiments, the message client 104 may perform the operation 506 according to a periodic schedule. For example, the message client 104 may be configured to organize electronic messages every X seconds, minutes, or any other suitable period of time. According to other embodiments, the operation 506 may be performed responsive to receiving an explicit request by a user. For example, the message client 104 may provide a user interface element (e.g., a button) that, when pressed by the user, causes the message client 104 to perform operation 506. In yet other embodiments, the message client 104 may be configured to perform operation 506 responsive to receiving an electronic message from the message exchange server 102.

Responsive determining that a process of organizing electronic messages is to be performed, the message client 104 may obtain one or more classification rules from the classification engine 108. To obtain the classification rules, FIG. 5 shows that the message client 104 may send a request for classification rules to the classification engine 108. This is shown at operation 508. With reference to FIG. 2, operation 508 may involve the message organizer module 202 of the message client 104 sending a request for classification rules to the rule provider module 210 of the classification engine 108.

Responsive to operation 508, the classification rule engine 108 may then retrieve one or more social classification rules associated with a user. For example, the classification rule engine 108 may access social profile database 112 (see FIG. 2) to obtain social data associated with the user 124. Based on the social data of the user 124, the classification rule engine 108 may identify one or more classification attributes associated with the user. For example, the social data may be a member profile with a classification attribute that identifies a job title assigned to the user 124 (e.g., a director, engineer, associate, and the like). In some embodiments, the member profile of the user 124 may include explicit group membership information. Further, in some example embodiments, the member profile may indicate that the user is supervised by another user in the social network. Thus, one or more users that are supervised by the same user may be an example of a classification attribute that associates two or more users to a social classification rule. The classification rule engine 108 may then access social classification rule database 222 (see FIG. 2) to obtain the social classification rule corresponding to each of the groups associated with the user.

In addition to or in the alternative of determining the social classification rules associated with a user, the classification rule engine 108 may respond to the request message sent in operation 508 by retrieving social classification rules explicitly identified in operation 508. For example, a request message sent as part of operation 508 may include one or more social classification attributes. Such may be the case where the messaging client 104, as directed by the user 124, identifies a social classification attribute that will be used to organize the electronic messages.

After the classification rule engine 108 obtains the one or more social classification rules, the classification rule engine 108 may then send the one or more social classification rules to the messaging client 104 at operation 510.

It is to be appreciated that although the messaging client 104 has been described herein as utilizing a pulling method for retrieving social classification rules from the classification rule engine 108, other embodiments may utilize a pushing mechanism where the classification rule engine 108 asynchronously pushes social classification rules to the messaging client 104. Such push messages may be sent by the classification rule engine 108 in response to updates to a social classification rule or, in other cases, periodically.

The messaging client 104 may then use the one or more social classification rules to organize the electronic messages associated with the user. This is shown as operation 512. For example, the messaging client 104 may automatically tag electronic messages that match the particular social classification rule. For example, if an electronic message has features that match the features of a social classification rule for an executive job title, the messaging client 104 may then tag the electronic message with an indication that electronic message is important for executives. As described above, some embodiments may utilize a classifier based on probabilistic models learned through the interactions of other users. In such embodiments, organizing the electronic messages may involve a probabilistic model such as a Bayesian model that returns a relevancy score in the form of a probability that a message is relevant for a user based on certain evidence, such as features of the message and/or classification attributes of the user 124.

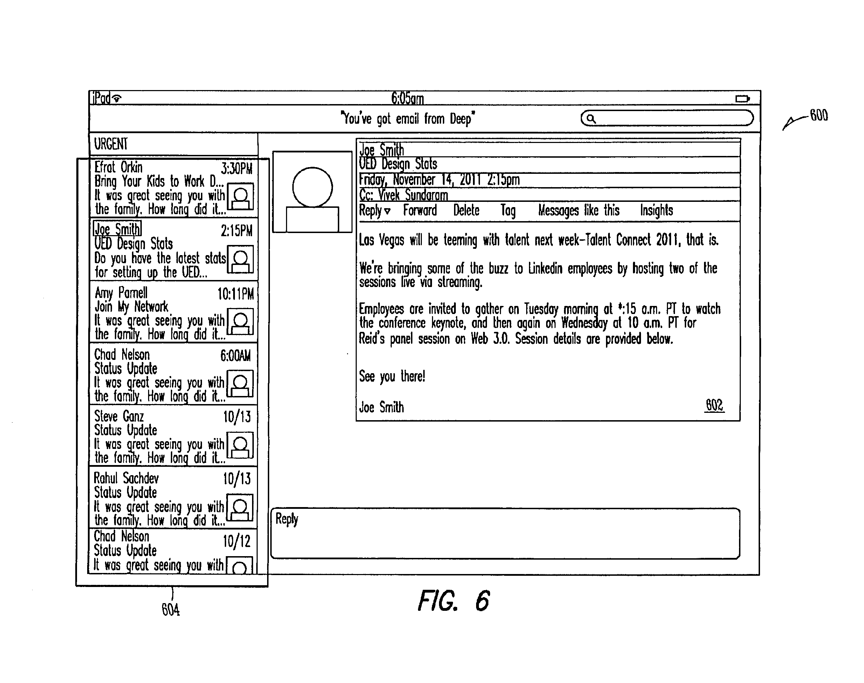

FIGs. 6-7 are user interface illustrations showing examples of a user interfaces that may be displayed by a messaging client (e.g., messaging client 104) to provide electronic messages organized according to a social classification rule, according to example embodiments. For example, the user interface 600 shown in FIG. 6, which could be representative of a web page, but could also presented via another application (e.g., such as an email client operating on a mobile device, phone or tablet device) illustrates an example of an electronic message 602 sent from a member named "JOE SMITH". In the left portion of the user interface 600, other electronic messages are presented, as may be organized using a social classification rule. For example, the electronic messages 604 may be organized based on those electronic messages that may be considered "URGENT" to the user based on user interactions of other users within a social network.

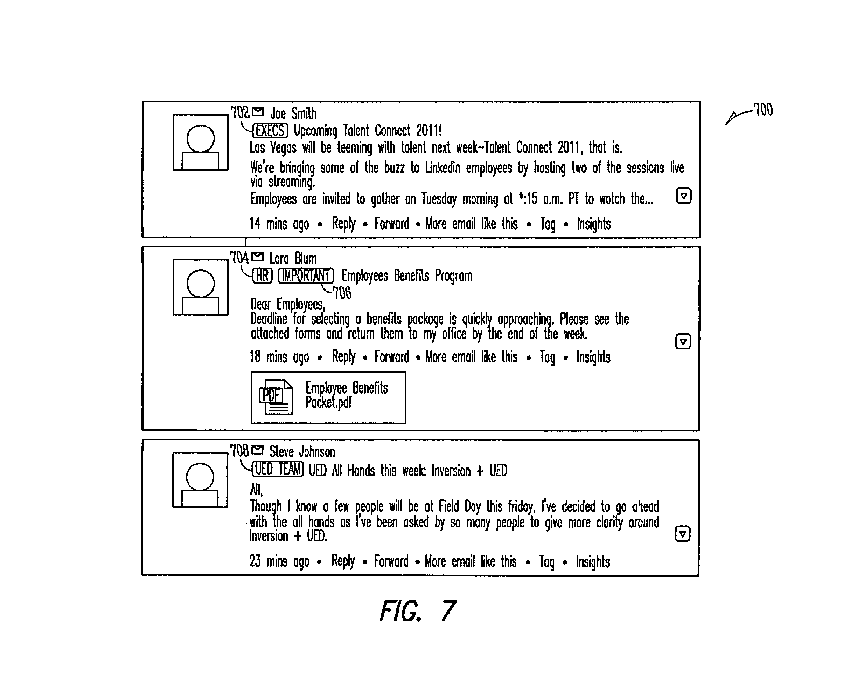

FIG. 7 is a user interface illustration showing an example of an user interface 700 that may be displayed by a messaging client, according to another example embodiment. In particular, the user interface 700 may be presented within a social networking application, as may be provided by LINKEDIN®. The user interface 700 may include user interface elements that present electronic messages 712, 714, 716. Further, the electronic messaging client 700 may include organizational tags 702, 704, 706, 708 that indicate a subject, topic, or priority of the corresponding electronic message. For example, electronic message 712 may be tagged with organizational tag 702 to indicate that the electronic message 712 is relevant for user members with the job title "EXECUTIVE." Further, electronic message 714 may include organizational tags 704, 706 to indicate that the electronic message 714 is relevant to user members interested in "HR" and because the electronic message 714 has been tagged as "IMPORTANT."

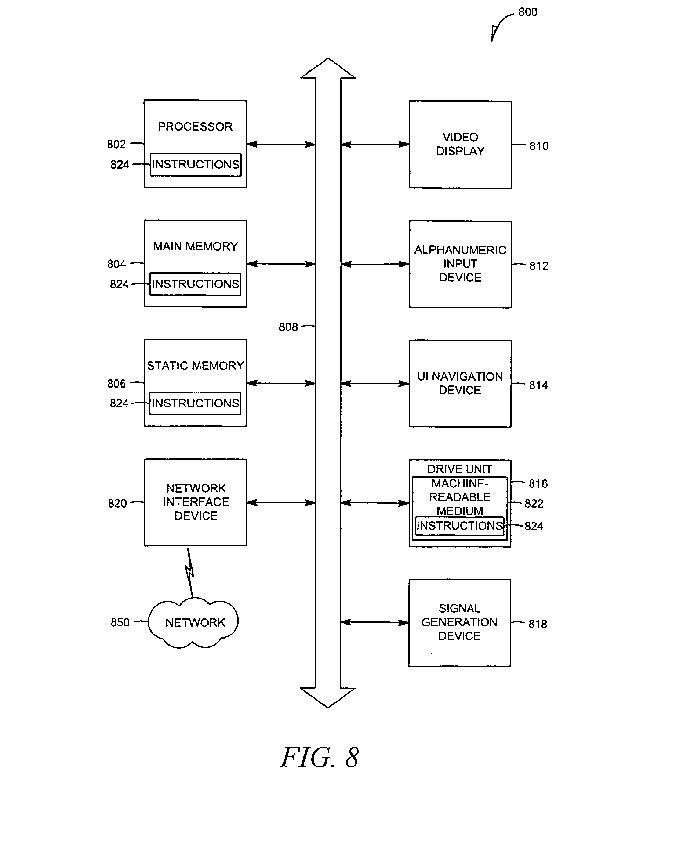

FIG. 8 is a block diagram of a machine in the form of a computer system within which a set of instructions, for causing the machine to perform any one or more of the methodologies discussed herein, may be executed. In alternative embodiments, the machine operates as a standalone device or may be connected (e.g., networked) to other machines. In a networked deployment, the machine may operate in the capacity of a server or a client machine in a client-server network environment, or as a peer machine in peer-to-peer (or distributed) network environment. In a preferred embodiment, the machine will be a server computer, however, in alternative embodiments, the machine may be a personal computer (PC), a tablet PC, a set-top box (STB), a Personal Digital Assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1500 includes a processor 1502 (e.g., a central processing unit (CPU), a graphics processing unit (GPU) or both), a main memory 1501 and a static memory 1506, which communicate with each other via a bus 1508. The computer system 1500 may further include a display unit 1510, an alphanumeric input device 1517 (e.g., a keyboard), and a user interface (UI) navigation device 1511 (e.g., a mouse). In one embodiment, the display, input device and cursor control device are a touch screen display. The computer system 1500 may additionally include a storage device 1516 (e.g., drive unit), a signal generation device 1518 (e.g., a speaker), a network interface device 1520, and one or more sensors 1521, such as a global positioning system sensor, compass, accelerometer, or other sensor.

The drive unit 1516 includes a machine-readable medium 1522 on which is stored one or more sets of instructions and data structures (e.g., software 1523) embodying or utilized by any one or more of the methodologies or functions described herein. The software 1523 may also reside, completely or at least partially, within the main memory 1501 and/or within the processor 1502 during execution thereof by the computer system 1500, the main memory 1501 and the processor 1502 also constituting machine-readable media.

While the machine-readable medium 1522 is illustrated in an example embodiment to be a single medium, the term "machine-readable medium" may include a single medium or multiple media (e.g., a centralized or distributed database, and/or associated caches and servers) that store the one or more instructions. The term "machine-readable medium" shall also be taken to include any tangible medium that is capable of storing, encoding or carrying instructions for execution by the machine and that cause the machine to perform any one or more of the methodologies of the present invention, or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices, e.g., EPROM, EEPROM, and flash memory devices; magnetic disks such as internal hard disks and removable disks; magneto-optical disks; and CD-ROM and DVD-ROM disks.

The software 1523 may further be transmitted or received over a communications network 1526 using a transmission medium via the network interface device 1520 utilizing any one of a number of well-known transfer protocols (e.g., HTTP). Examples of communication networks include a local area network ("LAN"), a wide area network ("WAN"), the Internet, mobile telephone networks, Plain Old Telephone (POTS) networks, and wireless data networks (e.g., Wi-Fi® and WiMax® networks). The term "transmission medium" shall be taken to include any intangible medium that is capable of storing, encoding or carrying instructions for execution by the machine, and includes digital or analog communications signals or other intangible medium to facilitate communication of such software.According to one aspect, there is disclosed a non-transitory computer-readable medium storing executable instructions thereon, which, when executed by a processor, cause the processor to perform operations including: receiving a user interaction update from a messaging client associated with a first user, the user interaction updates having data indicating that the first user interacted with an electronic message; determining that the first user is associated with a classification attribute, the classification attribute defining a relationship in a social network; using the user interaction update, updating a social classification rule corresponding to the classification attribute, the social classification rule including data usable to organize a plurality of electronic messages; and sending the updated social classification rule to a messaging client associated with a second user, the updated social classification rule being usable to organize electronic messages displayed by the messaging client associated with the second user.

Particularly, the classification attribute is at least one of: a job title, a department, a number of years of experience, a name, a skill, a group, an age, a gender, an interest, contact information, location information, a family member, education information, employment information, or a professional organization.

Further particularly, the user interaction update includes at least one of member profile data, electronic message data, or interaction data.

Further particularly, the user interaction update indicates a weighting factor for a message feature, which, when applied during a calculation to determine a relevancy score of a message, affects the relevancy score of the message.

Further particularly, the message feature is a value of a from-field, a value of a to-field, a value of a carbon copy-field, a keyword, or some combination thereof.

Further particularly, the message feature is an electronic message identifier, and the operation of updating the social classification rule includes incrementing a count associated with an electronic message associated with the electronic message identifier.

Further particularly, the user interaction update indicates that the first user responded to an electronic message within a particular time period.

There are further disclosed techniques for identifying and organizing electronic messages. With some embodiments, a method receives a user interaction update from a messaging client associated with a first user. The user interaction update has data indicating that the first user interacted with an electronic message. The method may then determine that the first user is associated with a classification attribute that defines a relationship in a social network. Using the user interaction update, the a social classification rule corresponding to the classification attribute associated with the first user is then updated. The social classification rule may include data usable to organize a plurality of electronic messages. Finally, the method may optionally send the updated social classification rule to a messaging client associated with a second user, where the updated social classification rule can be used to organize electronic messages displayed by the messaging client associated with the second user.

Although an embodiment has been described with reference to specific example embodiments, it will be evident that various modifications and changes may be made to these embodiments without departing from the broader spirit and scope of the invention. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

## Claims

1. A computer-implemented method comprising:
receiving a user interaction update from a messaging client associated with a first user, the user interaction update having data indicating that the first user interacted with an electronic message;
determining that the first user is associated with a classification attribute, the classification attribute defining a relationship in a social network;
using the user interaction update, updating a social classification rule corresponding to the classification attribute, the social classification rule including data usable to organize a plurality of electronic messages; and
sending the updated social classification rule to a messaging client associated with a second user, the updated social classification rule being usable to organize electronic messages displayed by the messaging client associated with the second user.

2. A computer-implemented method of claim 1, wherein the classification attribute is at least one of: a job title, a department, a number of years of experience, a name, a skill, a group, an age, a gender, an interest, contact information, location information, a family member, education information, employment information, or a professional organization.

3. The computer-implemented method of any one of the preceding claims, wherein the user interaction update includes at least one of member profile data, electronic message data, or interaction data.

4. The computer-implemented method of any one of the preceding claims, wherein the user interaction update indicates a weighting factor for a message feature, which, when applied during a calculation to determine a relevancy score of a message, affects the relevancy score of the message.

5. The computer-implemented method of claim 4, wherein the message feature is a value of a from-field, a value of a to-field, a value of a carbon copy-field, a keyword, or some combination thereof.

6. The computer-implemented method of any one of the preceding claims, wherein the message feature is an electronic message identifier, and the operation of updating the social classification rule includes incrementing a count associated with an electronic message associated with the electronic message identifier.

7. The computer-implemented method of any one of the preceding claims, wherein the user interaction update indicates that the first user responded to an electronic message within a particular time period.

8. A computer-program product comprising executable instructions thereon, which, when loaded and executed by a processor, cause the processor to perform operations of a method according to any one of the preceding claims.

9. A computer system comprising:
at least one processor;
a rule builder module implemented by the at least one processor and configured to:
receive a user interaction update from a messaging client associated with a first user, the user interaction updates having data indicating that the first user interacted with an electronic message,
determine that the first user is associated with a classification attribute, the classification attribute defining a relationship in a social network, and
update, using the user interaction update, a social classification rule corresponding to the classification attribute, the social classification rule including data usable to organize a plurality of electronic messages; and
a rule builder module implemented by the at least one processor and configured to send the updated social classification rule to a messaging client associated with a second user, the updated social classification rule being usable to organize electronic messages displayed by the messaging client associated with the second user.

10. The computer system of claim 9, wherein the classification attribute is at least one of: a job title, a department, a number of years of experience, a name, a skill, a group, an age, a gender, an interest, contact information, location information, a family member, education information, employment information, or a professional organization.

11. The computer system of claim 9 or 10, wherein the user interaction update includes at least one of member profile data, electronic message data, or interaction data.

12. The computer system of any one of the preceding claims 9 to 11, wherein the user interaction update indicates a weighting factor for a message feature, which, when applied during a calculation to determine a relevancy score of a message, affects the relevancy score of the message.

13. The computer system of claim 12, wherein the message feature is a value of a from-field, a value of a to-field, a value of a carbon copy-field, a keyword, or some combination thereof.

14. The computer system of any one of the preceding claims 9 to 13, wherein the message feature is an electronic message identifier, and the operation of updating the social classification rule includes incrementing a count associated with an electronic message associated with the electronic message identifier.
